# EUROPEAN PATENT APPLICATION

(11) **EP 4 844 891 A1**
(43) Date of publication of application: **25.11.2026**
(21) Application number: 25178610.9
(22) Date of filing: 23.05.2025
(51) Int. Cl.: H01M 10/653, H01M 10/658, H01M 50/204, D04H 1/413, D04H 1/4209, D04H 1/4218, D04H 1/58, D04H 1/64, D04H 1/732

(54) **THERMAL RUNAWAY BARRIER ARTICLE WITH HOT-MELT ENCAPSULATION**

(71) Applicant: 3M Innovative Properties Company, St. Paul, MN 55133-3427 (US)
(72) Inventor: Bray, Steven Dean, Saint Paul, MN (US); Gries, David Andrew, Saint Paul, MN (US); Young, Jacob Daniel, Saint Paul, MN (US); Wayne, Nathan, Saint Paul, MN (US); Rohmann, Anja Christina, Neuss (DE); Cura, Elisabeth, Neuss (DE)
(74) Representative: Bergen, Katja

(57) **Abstract**

A thermal runaway barrier article 14 adapted for being disposed between cells 12 of a battery assembly 10, wherein the thermal runaway barrier article comprises at least one nonwoven layer of inorganic fibers 15 and a first major surface 1, a second major surface 2 and side surfaces 3, 4 connecting the first and the second major surface with each other and a polymeric coating 16, 17, 18, 19 covering at least one surface of the thermal runaway barrier article, wherein the polymeric coating is configured to reduce fibers and/or particles from falling out of the nonwoven layer of inorganic fibers and wherein the polymeric coating comprises a hot-melt composition.

## Description

The present invention relates to a thermal runaway barrier article for being disposed between cells of a battery assembly and for at least significantly slowing down a thermal runaway event within a battery assembly, e. g. like a battery assembly used in an electric vehicle.

Electric motors used in electric or hybrid vehicles (e. g. automobiles) are powered, at least in part, by batteries. Lithium-ion batteries are typically used in such applications, and they are available in different forms: prismatic cells, pouch cells, or cylindrical-shaped cells. These batteries are disposed within the vehicle compactly in battery assemblies to save space. In a situation when one or more of the battery cells experience a thermal runaway event, it is possible that this event extends to other battery cells within the assembly, which should be avoided.

Thermal barrier materials are known in the prior art, such as for example in EP 4 091 212 A1, that discloses a multilayer material as a thermal insulation barrier in a rechargeable electrical energy storage system. The material comprising at least one inorganic fabric, as well as at least one layer comprising inorganic particles and/or inorganic fibers.

Different solutions have been developed to prevent particles and/or fibers from shedding from or falling out of the thermal runaway barrier article. During the process of assembling battery systems (this process may be called battery stacking) dust contamination from thermal runaway barrier articles should be avoided.

According to EP 4 401 200 A1 a thermal runaway barrier article comprises inorganic fibers in form of a nonwoven fibrous matrix of inorganic fibers and inorganic insulative particles as well as an organic encapsulation layer enclosing the nonwoven fibrous matrix. The encapsulation layer according to this publication has the form of a film that is wrapped around the nonwoven fibrous matrix of inorganic fibers and inorganic insulative particles. The film may be adhered to the nonwoven fibrous matrix with an adhesive.

US 2021/0167438 A1 discloses thermal runaway barrier article comprising reinforced aerogel compositions as well as a facing layer, wherein the facing layer can be a layer selected from a group consisting of a polymeric sheet, a metallic sheet, a fibrous sheet, and a fabric sheet. The facing layer can encapsulate the reinforced aerogel composition to prevent aerogel particles to fall out of the thermal runaway barrier article.

In view of the prior art mentioned above, there is still a need for solutions that can prevent fibers and/or particles from falling or shedding out of a thermal runaway barrier article that can be applied in an efficient way to the thermal runaway barrier article and that allow for easy handling of the thermal runaway barrier article.

The present invention provides a thermal runaway barrier article. The thermal runaway barrier article may be adapted for being disposed between cells of a battery assembly, i. e. it may provide for example the according thermal properties as well as the according erosion properties. The article according to the invention comprises at least one nonwoven layer of inorganic fibers (fiber layer). The nonwoven layer comprises a first major surface, a second major surface opposite the first major surface and side surfaces connecting the first and the second major surfaces with each other. The side surfaces are arranged along a thickness of the barrier article. The at least one nonwoven fiber layer may comprise particles dispersed in the layer. The at least one nonwoven fiber layer comprises a polymeric coating covering at least one surface of the at least one nonwoven fiber layer of inorganic fibers, wherein the polymeric coating may be configured to reduce fibers and/or particles from falling out of the layer of inorganic fibers and wherein the polymeric coating comprises a hot-melt composition.

The thermal runaway barrier article may be adapted for being disposed between cells of a battery assembly of for example an electric vehicle. For this purpose, it comprises a combination of fibers and/or particles that are suitable to be positioned between cells of a battery assembly and that provide properties that prevent an expansion of a thermal runaway event as described below. The battery assembly may also be any other battery assembly, such as for example a battery assembly used for energy storage systems or aerospace and/or marine applications.

A thermal runaway is when a battery cell experiences an exothermic chain reaction causing the phenomenon of an uncontrollable temperature rise of the battery cell. The exothermic chain reaction may be caused, for example, by over-heating of a battery cell, over-voltage of a battery cell, and mechanical puncture of a battery cell, among other reasons. A thermal runaway event refers to the overheating of one battery cell, in a battery assembly, causing a chain reaction of adjacent battery cells.

The thermal runaway barrier article according to the invention is designed such that it slows down a thermal runaway event within a battery assembly. As used herein, slowing down a thermal runaway event refers to the thermal runaway event being slowed down at least long enough to allow personnel adjacent to the battery assembly (e. g., an occupant inside of an electric vehicle passenger compartment) to escape to a safe distance away from the battery assembly, before being injured by the thermal runaway event. Once a battery cell malfunctions (e. g. is on fire or overheats to the point of not functioning) and a thermal barrier is in place between battery cells, the time for any adjacent battery cells to propagate the malfunction (e. g. catching fire or overheating) is at least more than 5 minutes, and preferably more than 10 minutes or even 20 minutes or more.

The thermal runaway barrier article according to the invention comprises at least one nonwoven layer of inorganic fibers. It may comprise only one nonwoven layer or more than one layer.

The nonwoven layer of inorganic fibers may be in the form of a mat, sheet, strip, or three-dimensional thin-walled structure. The thermal runaway barrier article comprises a first major surface, a second major surface opposite the first major surface and side surfaces connecting the first and the second major surfaces with each other, wherein the side surfaces may be arranged along the thickness of the barrier article. If the thermal runaway barrier article comprises only one nonwoven layer of inorganic fibers, the first and second major surface as well as the side surfaces of the fiber layer are identical to the first and second major surfaces and side surfaces of the thermal runaway barrier article. The first and the second major surface may be arranged substantially parallel to each other. In such a situation the side surfaces would have a rectangular shape. It is also possible that the major surfaces are arranged with an angle relative to each other such that the side surfaces would have a triangular or trapezoidal shape. The nonwoven layer of inorganic fibers may for example have the shape of a rectangle or any other suitable shape, such as a circle, triangle or any polygon with any number of sides.

The nonwoven layer of inorganic fibers may have a thickness in the range of from about 0.5 mm to about 10.0 mm. The thickness of the nonwoven layer of inorganic fibers determines the dimensions of the side surface of the nonwoven layer of inorganic fibers.

The thermal runaway barrier article according to the invention further comprises a polymeric coating or polymeric sealing or polymeric layer covering at least one surface of the at least one thermal insulation layer. The polymeric coating comprises a hot-melt composition and is configured to reduce fibers and/or particles from falling out of the nonwoven layer of inorganic fibers. A polymeric coating according to the invention refers to a continuous or discontinuous film or coating or sealing of a hot-melt composition. A continuous coating would be any kind of continuous, homogeneous coating with a constant thickness and without any holes, voids or other irregularities. The polymeric coating may also be discontinuous, meaning the coating may comprise holes and voids and/or may vary in its thickness. If as much material is being applied on the nonwoven layer of inorganic fibers, that a shedding or falling out of fibers and/or particles is prevented or reduced, the polymeric coating according to the invention fulfils its purpose. The thickness of the polymeric coating can vary depending on the specific application requirements and the properties of the at least one nonwoven layer of inorganic fibers and the desired adhesive properties. A low thickness of the polymeric coating or polymeric sealing or polymeric layer according to the invention is preferred in the application according to the invention because it helps to decrease the organic content in the thermal runaway barrier article.

A hot-melt composition or hot-melt adhesive is defined as a thermoplastic adhesive that gets applied as a melt and that gains strength upon cooling or more specific upon solidification and crystallization. The hot-melt generally provides a low viscosity in the melt (i. e. when it is heated) for easy application but solidifies into a cohesively strong material. In other words, a hot-melt adhesive or glue is a thermoplastic adhesive that is commonly supplied in solid state designed to be molten in an application tool, such as a hot-melt gun or a hot-melt nozzle. The adhesive is applied onto a substrate in a molten state and solidifies upon cooling, forming a strong bond between a first substrate and a second substrate. In the current application the strong bond exists between fibers building a surface of the thermal runaway barrier article thereby building a coating preventing fibers and/or particles from falling out of the article.

The use of a hot-melt composition as polymeric coating for a thermal runaway barrier article that prevents fibers and/or particles from shedding from or falling out of the article provides the advantage that it can be applied with known technologies and existing tools, which have a reasonable energy consumption and that the hot-melt composition cools or solidifies in a relatively short amount of time such that the production process of the thermal runaway barrier article does not need to be adapted. Additionally, hot-melt adhesive compositions usually comprise no or only a little amount of solvents, they usually do not smell at room temperature and depending on the composition they are not tacky after reaching room temperature.

A hot-melt adhesive comprises a base polymer that provides the primary adhesive properties and determines the overall performance of the adhesive. Typical base polymers for a hot-melt adhesive are polyvinyl acetate-co-polyethylene (EVA), low density polyethylene, polyethyl acrylate-co-polyethylene, paraffin waxes, polypropylene, styrene-butadiene block copolymers, styrene-isoprene block copolymers or phenoxy resins.

Other ingredients in a hot-melt composition formulation are tackifying agents, flexibilizers, waxes and antioxidants. Tackifying agents modify the performance of a hot-melt composition and influence the tackiness or stickiness of the composition in its melt as well as after solidification. Flexibilizers or plasticizers can be added to a hot-melt composition to make it permanently soft or flexible. They also improve the flexibility and workability of the adhesive and help to lower the melt viscosity as well as improve the wetting properties. Phthalates, tricresyl phosphate and polybutenes are typical examples of flexibilizers; they must be completely soluble in the base polymer. Waxes, which are the most important ingredient of a hot-melt composition, decrease the viscosity of the melt and the surface tension of the heated, molten adhesive. As hydrocarbonaceous materials, waxes in general have a lower surface tension than the base polymer of the hot melt and thus, lower the surface tension of the overall adhesive. Fillers are also used in hot-melt adhesives. Materials such as clay and talc can be used to control the melt viscosity of the hot-melt and to opacify the material. Finally, antioxidants are used in hot-melt compositions to protect the adhesive from degradation due to heat, light and oxygen exposure. Typical antioxidants are hindered phenols.

An example composition of a hot-melt comprises 40 % EVA copolymer, 15 % phenolic resin tackifier, 12,5 % polyterpene tackifier, 12,5 % synthetic polyterpene tackifier, 20 % wax, 0.1 % antioxidant.

Hot-melt compositions that are commercially available and that can be used for the invention as described in the current patent application are for example 3M^{™} Hot Melt Adhesive 3762 as well as 3M^{™} Sprayable Hot Melt Adhesive 6111, both commercially available from 3M Company, St. Paul, MN, USA. The 3762 adhesive comes with an application temperature of 121 to 132 °C and an open time of 25 seconds; the 6111 adhesive comes with an application temperature of 177 to 196 °C and an open time of 60 seconds. 3M^{™} Hot Melt Adhesive 3792 comes with an application temperature of 177 to 196 °C and an open time of 50 seconds. Please note the following definition of open time: open time is the max time between the application of the adhesive and joining the parts, wherein the data is based on 1/8 in semicircular bead on non-metallic substrates at 75 °F, and wherein higher environmental temperatures and/or larger beads will lengthen the open time.

For the invention it is preferred, when the application temperature of the hot-melt composition ranges from to 100 °C to 200 °C, preferably from 100 °C to 180 °C, more preferably from 100 °C to 150 °C.

For the invention it is preferred, when the cooling or open time ranges from 5 sec after application to 1 min.

The polymeric coating of the thermal runaway barrier article according to the invention covers at least one surface of the at least one nonwoven layer of inorganic fibers. The polymeric coating may cover at least one of the side surfaces and/or it may cover at least one of the major surfaces. It may cover only the side surfaces or it may cover only the major surfaces. It may also cover at least one side surface and at least one major surface. Depending on the manufacturing process of the thermal runaway barrier article, it may be more efficient with respect to the reduction of fibers and/or particles falling out of the mat to cover the side surfaces or to cover the major surfaces. If for example the at least one layer of inorganic fibers is manufactured by a dry-laid process to form a nonwoven layer of inorganic fibers, and if said layer is cut into the correct size, it may for example be most efficient to only cover the side surfaces.

According to one embodiment, the nonwoven fiber layer may comprise particles disperse in at least one fiber layer. The particles may be arranged evenly, uniformly or in a homogeneous way or in an in-homogeneous way in the layer such as for example with a gradient, where the concentration of particles adjacent to one major surface differs from the concentration of particles adjacent to the opposite major surface. A list of particles that may be used for a thermal runaway barrier article according to the invention is provided below. The particles used in a thermal runaway barrier article may influence the properties of the thermal runaway barrier article. By selecting the particles, the performance of the article may be adapted to its application.

The particles may be thermally insulative inorganic particles and may comprise particles selected from the groups consisting of inorganic aerogel, xerogel, hollow or porous ceramic microspheres, unexpanded vermiculite, irreversibly or permanently expanded vermiculite, fumed silica, otherwise porous silica, irreversibly or permanently expanded or unexpanded perlite, pumicite, irreversibly or permanently expanded clay, diatomaceous earth, titania, zirconia, and combinations thereof. The inorganic particles can be solid, hollow or contain multiple voids. Further information about particles that may be used in a thermal runaway barrier article according to the invention are described in WO 2024/187 098. The disclosure of this reference relating to the particles is incorporated herein by reference.

The inorganic fibers of the fiber layer may be selected from the groups consisting of polycrystalline ceramic fibers, glass fibers, ceramic fibers, non-bio-persistant fibers, alumina fibers, basalt fibers, silicate fibers or a combination thereof. Explicitly the inorganic fibers of the thermal runaway barrier article may be selected from polycrystalline fibers, glass fibers - such as for example E-glass fibers, R-glass fibers, ECR-glass fibers, C-glass fibers, AR-glass fibers - basalt fibers, ceramic fibers, non-bio-persistant fibers, alumina fibers, silica fibers, carbon fibers, silicon carbide fibers, boron fibers, silicate fibers, steel filaments or a combination thereof. Non-bio-persistant fibers may for example be alkaline earth silicate fibers. Other fibers are possible as well, if they withstand the high temperatures generated in a thermal event. The fibers may be chemically treated.

According to one example of the invention, the thermal runaway barrier article may provide, in addition to the polymeric hot-melt coating, a protection layer. The protection layer may be any layer that is configured such as to prevent fibers and/or particles from falling out of shedding from the thermal runaway barrier article. The layer may for example be a polymeric layer, a woven layer or a nonwoven layer. It may for example be a continuous PE film with a heat activated adhesive, such as for example the commercially available product 3M^{™} Scotchpak^{™} PF200M. It may for example be a polymeric film that comprises at least one polymeric material selected from polyolefins, polyvinylchloride, ethylene-vinyl acetate copolymer, preferably from polyolefins. It may be a multi-layer encapsulation material, a multi-layer polyester film with a heat activated adhesive, an impregnated paper like material or any other suitable material.

Having one side of the thermal runaway barrier article covered with a protection layer providing a material different than a hot-melt composition may provide the advantage that during production the article may be positioned onto this material and may be transported on this material through the production process, e. g. while being coated on other sides with the polymeric coating according to the invention comprising a hot-melt composition according to the invention.

According to a further embodiment of the invention the hot-melt composition may be selected such that it is sprayable or that it can be applied through a spray coating process. In the context of hot-melt adhesives, spray coating refers to a process where the adhesive is heated until it becomes a liquid or a melt and then atomized into fine droplets using a spray nozzle. The atomization may for example be initiated by using air. It is also possible to atomize the melted hot-melt adhesive by using pressure. These droplets are then uniformly applied to a substrate. The droplets may form a thin, even layer of adhesive, they may also form filaments or other shapes. This method allows for precise control over the amount and distribution of the adhesive, making it ideal for applications requiring consistent coverage and strong bonding properties. The droplets may also be applied in a non-uniform way. This method also allows for a contact free application that provides a lot of advantages in the context of coating thermal runaway barrier materials comprising at least one nonwoven layer of inorganic fibers because it avoids an impact of the surface of the fiber layer, which might lead to unwanted fiber shedding. Sprayable as referred to in this application, describes the property of the hot-melt composition that allows it to be applied in a spray coating process. This property typically requires the composition or adhesive to have a viscosity that permits it to be dispersed through a nozzle under pressure with the use of air, forming a uniform coating. The adhesive should maintain its sprayable characteristics at the application temperature, ensuring consistent coverage and adhesion.

Application of the hot-melt adhesive with any other suitable nozzle is also possible, such as for example the application of one or several thin filaments or the application of a hot-melt. These methods may also be combined with an air-flow. One preferred way of applying the hot-melt adhesive is a contact free application method since it reduces the risk of shedding of material from the nonwoven layer of inorganic fibers during the application of the polymeric coating.

According to another embodiment of the invention the thermal hot-melt composition is selected such that it is flexible or not brittle at the application temperature as defined above, after solidification or cooling as well as at service temperature of the battery. Service temperature as referred to in this patent application ranges from 0 °C to 60 °C. Providing a hot-melt composition for covering or sealing at least one surface of a nonwoven layer of inorganic fibers of a thermal runaway barrier article that is flexible at the application temperature as defined above, after solidification or cooling as well as at service temperature of the battery provides the advantage that the thermal runaway barrier article stays flexible as well such that it is easy to mount, can be used in all kinds of geometric environments and provides the required flexibility during use. The flexibility allows for example for a good contact between the thermal runaway article and the battery cell. For this feature the hot-melt composition according to the invention may comprise a semi-crystalline thermoplastic, with a rubbery plateau at least between 0 °C and 60 °C. A rubbery plateau as used in this patent application is defined as a region in the viscoelastic behaviour of polymers, observed in a plot of modulus versus temperature. The rubbery plateau is characterized by a relatively constant modulus over a range of temperatures. It occurs after the glass transition region and before the flow region when a polymer is heated.

According to another embodiment the hot-melt composition is selected such that it is tack-free. Tack is the instantaneous wetting of a substrate under little or no applied pressure to rapidly develop a measurable strength. Tack-free in the context of the invention described in this patent application refers to a condition where a material, such as an adhesive, sealant, or coating, has cured or dried to the point that it no longer feels sticky or tacky to the touch. This means that the surface can be touched without any material adhering to the fingers or other objects. The tack-free time is an important parameter in the handling of such materials, indicating when it is safe to handle or proceed with further processing. A thermal runaway barrier article according to the invention that provides tack-free surfaces is easy to handle and does not require additional protection of a potentially sticky surface. Especially, when coating the side surfaces of the thermal runaway barrier article according to the invention, it is beneficial if the hot-melt composition is tack-free at room temperature after cooling, because of ease of handling.

It is also possible to select the hot-melt composition such that it is tacky after solidification or cooling. The tack of the hot-melt adhesive coating can for example be used during the assembly process of the battery assemblies to attach the thermal runaway barrier material to the battery cell that it protects. In case of a use of a tacky hot-melt adhesive, additional liners might be needed in order to protect the tacky surface during handling of the thermal runaway barrier article.

The invention also relates to a battery assembly, comprising a plurality of battery cells disposed in a housing and a plurality of thermal runaway barrier articles according to any of the above-described embodiments. The thermal runaway barrier article is disposed next to the battery cells to thermally separate them from adjacent cells. The thermal runaway barrier article can either be wrapped around a cylindrical cell, or it can be disposed between two prismatic cells our pouch cells.

The invention further relates to method of making a thermal runaway barrier article according to any of the above-described embodiments with the following steps:
- forming at least one nonwoven layer of inorganic fibers, the layer being shaped such that the thermal runaway barrier article comprises a first major surface, a second major surface opposite the first major surface and side surfaces connecting the first and the second major surface with each other;
- optionally providing a plurality of particles;
- optionally disposing the plurality of particles into the at least one nonwoven layer of inorganic fibers so as to be evenly or uniformly distributed throughout or within the nonwoven layer of inorganic fibers;
- in case there is more than one nonwoven layer of inorganic fibers, stacking them on top of each other on their major surfaces to form the thermal runaway barrier article; and
- coating thermal runaway barrier article on at least one surface with a hot-melt composition to form a polymeric coating to reduce fibers and/or particles from falling out of the thermal runaway barrier article.

If the thermal runaway barrier article according to the invention comprises more than one nonwoven layer of inorganic fibers and each of the layers of inorganic fibers comprises a first and second major surfaces as well as side surfaces connecting the first and the second major surface with each other, it is also possible to coat one or more of the first and second major surfaces of each nonwoven layer of inorganic fibers and stack them on top of each other. As an alternative it is possible to only coat the top major surface and the bottom major surface of a stack of layers of inorganic fibers building the thermal runway barrier article.

According to one embodiment of the claimed method, the coating of the thermal runaway barrier article on at least one surface with a hot-melt composition to form a polymeric coating may comprise the steps of heating the hot-melt composition to a temperature that is above the melt-temperature of the hot-melt composition and spray-coating the melt of the hot-melt composition through a spray nozzle onto the at least one surface of the thermal runaway barrier article.

Other application methods of polymeric layer comprising a hot-melt composition are possible as well, such as for example extrusion coating, slot die coating, roll coating or slot nozzle application. A contact free application method provides advantages when coating a surface comprising fibers because it reduces the risk of additional fiber shedding during the application.

### EXAMPLES:

The following samples were prepared:

### Example E1

The thermal runaway barrier article comprising a nonwoven of inorganic fibers and particles disperse in the nonwoven is coated on its two major surfaces with an impregned paper, one-sided heat-seal paper, namely HEATPACK MWA 18g/m2, from the company Nippon Paper Papylia Co, LTD, Japan. This sandwich is cut on the desired article dimension (thickness of 7 mm, length of 100 mm, a width of 250 mm). The mat is then spray-coated all four side surfaces with the coating being 13 mm, while the side surface is 7 mm (overedge spraying). A fish die nozzle Intermittent Signature^{®} from Nordson Corporation, 28601 Clemens Road, Westlake, Ohio 44145, USA with 13 mm shim is used to coat the hot melt (3M^{™} Hot Melt Adhesive 3762) at 130 °C onto the side surfaces, which is swirled with air to be spread onto the edge of the mat. 40g per square meter and a speed of the nozzle of 400m/s are used.

### Example E2

The thermal runaway barrier article comprising the nonwoven of inorganic fibers and particles disperse in the nonwoven is cut on the desired article dimension (thickness of 7 mm, length of 100 mm, a width of 250 mm.)

Sample E2 is spray-coated on its two major surfaces. A fish die nozzle Intermittent Signature^{®} from Nordson Corporation, 28601 Clemens Road, Westlake, Ohio 44145, USA with 100 mm shim is used to form the hot melt film (3M^{™} Hot Melt Adhesive 3762) at 130 °C, which is swirled with air to be spread onto the two major surfaces of the mat. 16 g per square meter and a speed of the nozzle of 400 m/s are used for the major surfaces. The side surfaces were covered with a tape, namely with 3M^{™} Performance Industrial Masking Tape 301E, commercially available from 3M Company, St. Paul, MN, USA.

### Comparative Examples C1 and C2

As comparative Example C1 a nonwoven of inorganic fibers and particles disperse in the nonwoven is coated on its two major surfaces with an impregned paper, one-sided heat-seal paper, namely HEATPACK MWA 18g/m2, from the company Nippon Paper Papylia Co, LTD, Japan, was taken. This sandwich is cut on the desired article dimension (thickness of 7 mm, length of 100 mm, a width of 250 mm). C1 was not spray-coated on its edges.

As comparative Example C2 a thermal runaway barrier article comprising the nonwoven of inorganic fibers and particles disperse in the non-woven is cut on the desired article dimension (thickness of 7 mm, length of 100 mm, a width of 250 mm.) The side surfaces were covered with a tape, commercially available from 3M Company, St. Paul, MN, USA. C2 was not spray-coated on its major surfaces.

### Test Method - Shedding Test:

A first black paper was provided with a size of 210 mm by 297 mm (A4). Each four side surfaces of the samples E1 and C1 were beaten 5 times onto this paper, vertically from a hight of 20 cm. The samples were removed and the particles/fibers on the paper were counted.

On a second black paper with the same size as the first black paper, the samples E2 and C2were placed on their first major surface and beaten three times with the hand then turned around and beaten again three times with the hand. The samples were removed and the particles/fibers on the paper were counted.

### Testresults

| Sample | Number of Particles/Fibers |
|---|---|
| E1 (with edge coating) | 2 |
| C1 (without edge coating) | 28 |
| E2 (with coating of major surface) | 4 |
| C2 (without coating of major surface) | > 100 |

These results clearly show, comparing E1 and C1, that an edge coating reduces the fiber shedding drastically. They also show, comparing E2 and E3, that a coating of the major surfaces reduces the fiber shedding even more.

The invention will now be described in more detail with reference to the following Figures exemplifying particular embodiments of the invention:
- Fig. 1: is a schematical drawing of a battery assembly including a plurality of battery cells;
- Fig. 2a: is a schematical drawing of a top view of a thermal runaway barrier article according to the invention;
- Fig. 2b: is a schematical drawing of a cross-sectional view of the thermal runaway barrier article according to Fig. 2a;
- Fig. 3: is a schematic drawing of an application tool for applying a hot-melt composition onto a thermal runaway barrier article;
- Fig. 4a to 4c: are schematic drawings of different application tools for applying a hot-melt composition onto a thermal runaway barrier article;
- Fig. 5a: is a schematical drawing of a front view of a hot-melt spray application apparatus and
- Fig. 5b: is a schematical drawing of a side through cut view of the hot-melt spray application apparatus according to Fig. 5a.

Herein below various embodiments of the present invention are described and shown in the drawings wherein like elements are provided with the same reference numbers.

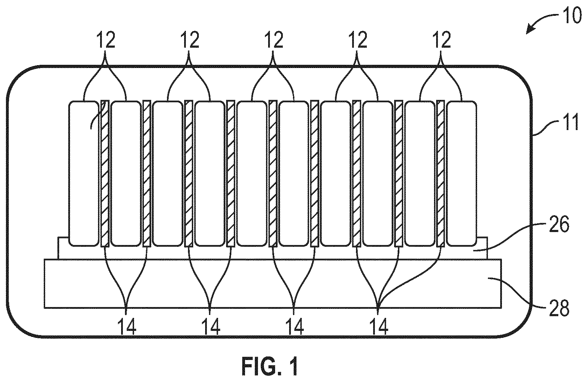

In Fig. 1 an exemplary battery cell assembly 10 is shown, that includes a housing 11, a plurality of battery cells 12 and a plurality of thermal runaway barrier articles 14. Each thermal runaway barrier article 14 can be in the form of one or more layers of a thermal insulation material 10, for example layers of inorganic fibers. The thermal runaway barrier articles 14 can be placed between adjacent battery cells 12, between groups of cells 12, or both, at one or more locations throughout the battery cell assembly 10. Depending on the shape of the battery cells the thermal runaway barrier article 14 may also be wrapped around the battery cell. Typically, the battery cell assembly 10 rests above a cooling plate 16 and a tray 18.

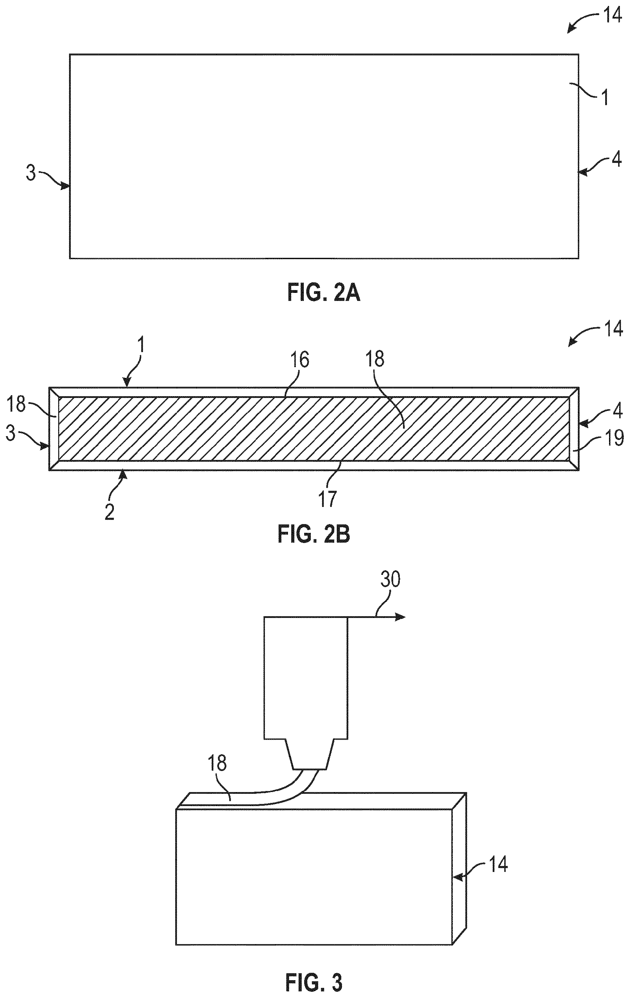

Referring to Fig. 2a and 2b, schematical drawings of a top view and a cross-sectional view of a thermal runaway barrier article 14 are shown. The thermal runaway barrier article 14 has a rectangular shape, from which a first major surface 1 is shown in Fig. 2A. The thermal runaway barrier article 14 further comprises at least one nonwoven layer of inorganic fibers, the layer comprises a first major surface 1 (shown in Fig. 2a, 2b), a second major surface 2 (Fig. 2b) and side surfaces 3 and 4 (Fig. 2a, 2b). It also comprises two additional side surfaces that are not visible in the drawings. The thermal runaway barrier article 14 may further comprise particles disperse in the nonwoven layer of inorganic fibers. Finally, the thermal runaway barrier article 14 comprises a polymeric coating (16, 17, 18, 19) which comprises a hot-melt composition. The polymeric coating may cover at least one surface of the thermal runaway barrier article 14. In the embodiment shown in Fig. 2a and 2b the thermal runaway barrier article 14 comprises a polymeric coating 16 and 17 covering both major surfaces 1 and 2. It also comprises a polymeric coating 18 and 19 on both visible side surfaces 3 and 4. The two side surfaces that are not visible in Fig. 2b may also be coated.

The polymeric coatings covering a surface of the thermal runaway barrier article prevent fibers and/or particles dispersed in the thermal runaway barrier article from falling out of the product, which enables a clean handling of the article, which is necessary, especially when battery assemblies are being built. Depending on the kind of thermal runaway barrier article it is possible to only cover one surface or several surfaces with a polymeric coating comprising a hot-melt adhesive. It is also possible that at least one of the surfaces of the thermal runaway barrier article is covered with another coating/layer to prevent fibers from shedding, such as for example with a polymeric film, a multi-layer encapsulation material, a paper-like material.

Fig. 3 shows one example of an application tool 30 for applying a polymeric coating 18 onto one or several layers of inorganic fibers. The application tool 30 may be a commercially available nozzle for applying adhesives that is moved relative to the thermal runaway barrier article 14. It is preferred that the polymeric coating according to the invention gets applied by using air, thus that the polymeric coating 18 gets applied by spraying or spray coating. The shape of the nozzle as well as the amount of air and the speed of air need to be adapted to the hot-melt adhesive that is used and to the specific application it is used for. Fig. 3 shows the applied coating only in a schematic manner.

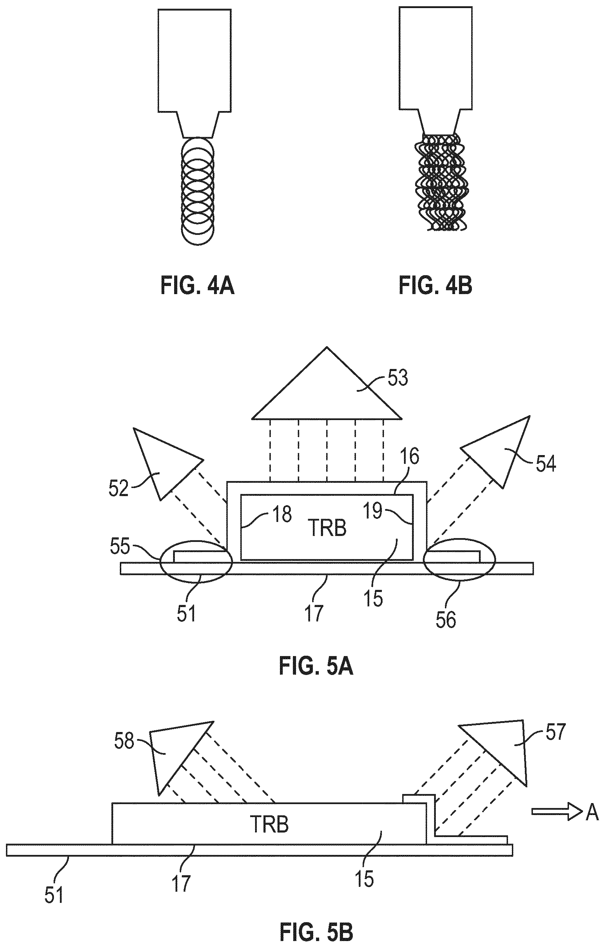

Fig. 4 a and b show possible patterns of an applied polymeric coating according to the invention. It is for example possible to apply the hot-melt composition in the form of a filament with a rotating nozzle or in form of several filaments with a nozzle moving in an appropriate way (see Fig. 4a and 4b), such that the polymeric material of the polymeric coating gets applied in a regular pattern such as for example circles (Fig. 4a) or such that it gets applied in an irregular pattern (Fig. 4b).

Fig. 5a is a schematical drawing of a front view of a hot-melt spray application apparatus. The thermal runaway barrier article 15 is positioned on a transporting layer 51. The transporting layer 51 may either be used for transporting the thermal runaway barrier article 15 through the application apparatus. It may also function as a protection layer that stays on the thermal runaway barrier article 15 after production and also protects one major surface 17 of the article 15 from fibers shedding or falling out. Fig. 5a also shows three spray nozzles 52, 53 and 54 for spray coating the thermal runaway barrier article 15 with a polymeric coating comprising a hot-melt composition, wherein the nozzle 53 is directed towards a major surface 16 of the thermal runaway barrier article 15 that is opposite the surface 17 facing the transporting or protection layer 51. The nozzles 52 and 54 are directed towards the side surfaces 18 and 19 of the thermal runaway barrier article 15. The spray nozzles 52 and 54 are also directed such that the polymeric coating covers a portion of the transporting layer 51 in such a way that two overlap areas 55 and 56 are being created. In this process it is possible to spray the side surfaces first and then finish the coating with a uniform coating through the nozzle 53 of the major surface.

Fig. 5b is a schematical drawing of a side through cut view of a hot-melt spray application apparatus, wherein the thermal runaway barrier article 15 moves into the direction of the arrow A. The thermal runaway barrier article 15 is positioned on a transporting layer 51. The transporting layer 51 may either be used for transporting the thermal runaway barrier article 15 through the application apparatus. It may also function as a protection layer that stays on the thermal runaway barrier article 15 after production and also protects one major surface 17 of the article 15 from fibers shedding or falling out. Fig. 5b also shows two spray nozzles 57 and 58 applying a polymeric coating onto the thermal runaway barrier article 15, both nozzles applying the coating with an angle, wherein a leading nozzle 57 is directed away from the transportation direction indicated by the arrow A and a trailing nozzle 58 is directed into the transportation direction. The two nozzles are used to provide a uniform coating of the thermal runaway barrier material 15.

The following manufacturing steps would be possible steps to apply a polymeric coating onto a thermal runaway barrier article 15:
- laminating at least on a major surface of a thermal runaway barrier article though heat lamination with a nip roll heated or using infrared light for activation with an appropriate polymeric film;
- spray-coating at least one surface of the thermal runaway barrier article with a polymeric coating comprising a hot-meld composition according to the invention;
- providing and applying a liner, in case the polymeric coating is tacky after cooling or solidification.

## Claims

1. A thermal runaway barrier article (14) comprising:
- at least one layer of nonwoven inorganic fibers (15);
- a first major surface (1), a second major surface (2) opposite of the first major surface and side surfaces (3, 4) connecting the first and the second major surface with each other;
- optionally particles dispersed within the at least one nonwoven layer of inorganic fibers; and
- a polymeric coating (16, 17, 18, 19) on at least a portion of at least one of: the two major surfaces and the side surfaces of the thermal runaway barrier article and
- wherein the polymeric coating comprises a hot-melt composition.

2. The thermal runaway barrier article according to claim 1, wherein the polymeric coating (18, 19) covers at least one side surface (3, 4) of thermal runaway barrier article (14).

3. The thermal runaway barrier article according to claim 1 or 2, wherein the polymeric coating (16, 17, 18, 19) covers at least one side surface (3, 4) and at least one of the first and second major surfaces (1, 2) of the thermal runaway barrier article (14).

4. The thermal runaway barrier article according to any of the preceding claims, wherein at least one major surface (1,2) provides a protection layer.

5. The thermal runaway barrier article according to any of the preceding claims, wherein the inorganic fibers of the fiber layer are selected from the groups of polycrystalline ceramic fibers, glass fibers, ceramic fibers, non-bio-persistant fibers, alumina fibers, basalt fibers, silicate fibers or a combination thereof.

6. The thermal runaway barrier article according to any of the preceding claims, wherein the particles dispersed in the at least one nonwoven layer of inorganic fiber are selected such as to support the thermal properties of the thermal runaway barrier article (14).

7. The thermal runaway barrier article according to any of the preceding claims, wherein the hot-melt composition is selected such that it is sprayable.

8. The thermal runaway barrier article according to any of the preceding claims, wherein the hot-melt composition is selected such that it is flexible at room temperature after solidification.

9. The thermal runaway barrier article according to any of the preceding claims, wherein the hot-melt composition is selected such that it is tack-free at room temperature after solidification.

10. A battery assembly (10) comprising:
- a plurality of battery cells (12) disposed in a housing (11); and
- a plurality of thermal runaway barrier articles (14) according to any one of the preceding claims;
wherein the plurality of thermal runaway barrier articles are being disposed next to the battery cells such as to thermally separate them from adjacent battery cells.

11. A method of making a thermal runaway barrier article according to any one of claims 1 to 9, the method
comprising:
- forming at least one nonwoven layer of inorganic fibers, the layer being shaped such that the thermal runaway barrier article comprises a first major surface, a second major surface and side surfaces connecting the first and the second major surface;
- optionally providing a plurality of particles;
- optionally disposing the plurality of particles into the at least one nonwoven layer of inorganic fibers so as to be evenly or uniformly distributed throughout or within the nonwoven layer of inorganic fibers;
- in case there is more than one nonwoven layer of inorganic fibers, stacking them on top of each other on their major surfaces to form the thermal runaway barrier article; and
- coating thermal runaway barrier article on at least one surface with a hot-melt composition to form a polymeric coating to reduce fibers and/or particles from falling out of the thermal runaway barrier article.

12. Method of making a thermal runaway barrier article according to claim 12, wherein the coating of the thermal runaway barrier article on at least one surface with a hot-melt composition to form a polymeric coating comprises the steps of:
- heating the hot-melt composition to a temperature that is above the melt-temperature of the hot-melt composition and
- spray-coating the melt of the hot-melt composition through a spray-nozzle onto the at least one surface of the thermal runaway barrier article.
